# EUROPEAN PATENT SPECIFICATION

(11) **EP 4 028 462 B1**
(45) Date of publication and mention of the grant of the patent: **09.08.2023**
(21) Application number: 20767549.7
(22) Date of filing: 08.09.2020
(51) Int. Cl.: C08J 3/20, C08J 5/18, C08K 5/20, C08K 7/14, C08J 3/22, C08K 3/105, C08K 3/04

(54) **POLYAMIDE COMPOSITION COMPRISING CARBON BLACK**
POLYAMIDZUSAMMENSETZUNG MIT RUSS
COMPOSITION DE POLYAMIDE COMPRENANT DU NOIR DE CARBONE

(30) Priority: 11.09.2019 EP 19196637
(43) Date of publication of application: 20.07.2022
(73) Proprietor: BASF SE, 67056 Ludwigshafen am Rhein (DE)
(72) Inventor: DESBOIS, Philippe, 67056 Ludwigshafen (DE); ENGELMANN, Jochen, 67056 Ludwigshafen (DE); CREMER, Jens, 67056 Ludwigshafen (DE)
(86) International application number: PCT/EP2020/075074
(87) International publication number: WO 2021/048123

(56) References cited:
- WO-A1-2013/128251
- CN-A- 101 161 724
- US-A1- 2010 032 629

## Description

The present invention relates to a polyamide composition (PC) comprising at least one polyamide (A) and at least one carbon black (B), wherein the surface layer of the at least one carbon black (B) comprises not more than 2 % by weight of oxygen, based on the total weight of the surface layer of the at least one carbon black (B), and wherein the weight of oxygen in the surface layer is measured by X-ray photoelectron spectroscopy at an X-ray penetration depth of 2 to 10 nm, wherein the polyamide composition (PC) comprises in the range from 55 to 99.9 % by weight of the at least one polyamide (A) and in the range from 0.1 to 4 % by weight of the at least one carbon black (B), based on the total weight of the polyamide composition (PC). The present invention further relates to a process for producing the polyamide composition (PC) and to a process for the production of a moulded article by forming the polyamide composition (PC). In addition, the present invention relates to a moulded article comprising the polyamide composition (PC), and to the use of the at least one carbon black (B) in a polyamide composition (PC) for increasing the shrinkage of moulded articles made from said polyamide composition (PC).

Polyamides in general are semicrystalline polymers which are of particular importance industrially on account of their very good mechanical properties. In particular they possess high strength, stiffness, and toughness, good chemical resistance, and a high abrasion resistance and tracking resistance. These properties are particularly important for the production of injection mouldings. High toughness is particularly important for the use of polyamides as packaging films. On account of their mechanical properties, polyamides are used industrially for producing textiles such as fishing lines, climbing ropes, and carpeting. Polyamides also find use for the production of wall plugs, screws, and cable ties. Polyamides, furthermore, are employed as paints, adhesives, and coating materials.

However, as polyamides generally shrink only slightly during moulding, the resulting moulded articles often show an insufficient shrinkage which makes them inadequate for some applications, especially for some applications in the automotive or electronic industry. Further, in case the resulting moulded articles show a sufficient shrinkage, the mechanical properties of the resulting moulded articles are often inadequate.

It is therefore an object of the present invention to provide a polyamide composition which shows an increased shrinkage during moulding and from which it is possible to produce moulded articles with good mechanical properties in a very simple and inexpensive manner.

This object is achieved in accordance with the invention by a polyamide composition (PC) comprising the following components (A) and (B)
(A) at least one polyamide,
(B) at least one carbon black,
wherein the surface layer of component (B) comprises not more than 2 % by weight of oxygen, based on the total weight of the surface layer of component (B), and wherein the weight of oxygen in the surface layer is measured by X-ray photoelectron spectroscopy at an X-ray penetration depth of 2 to 10 nm, wherein the polyamide composition (PC) comprises in the range from 55 to 99.9 % by weight of the at least one polyamide (A) and in the range from 0.1 to 4 % by weight of the at least one carbon black (B), based on the total weight of the polyamide composition (PC).

Surprisingly, it has been found that during moulding, the inventive polyamide composition (PC) shows an increased shrinkage compared to polyamide compositions of the prior art. Further, it has surprisingly been found that, despite the high shrinkage, the resulting mouldings exhibit a high creep resistance as well as good mechanical properties like a high tensile modulus of elasticity and a high tensile strength.

Furthermore, it has also surprisingly been found that the inventive polyamide composition (PC) shows an increased crystallization compared to polyamide compositions of the prior art.

In addition, the process for the production of the moulded article by forming the inventive polyamide composition (PC) is very cost efficient since the cycle time of this process is significantly shorter than the cycle time of a process for the production of a moulded article by forming polyamide compositions of the prior art.

Moreover, it has surprisingly been found that in case the at least one polyamide (A) in the inventive polyamide composition (PC) is polyamide 6, the resulting mouldings exhibit such good mechanical properties that, for example, the much more expensive polyamide 66 which is normally used in polyamide compositions in the automotive or electronics industry could be replaced by polyamide 6.

The polyamide composition (PC) according to the invention is more particularly elucidated herein below.

### Polyamide composition (PC)

According to the invention the polyamide composition (PC) comprises at least one polyamide (A) and at least one carbon black (B).

In the context of the present invention "at least one polyamide (A)" is to be understood as meaning either precisely one polyamide (A) or else a mixture of two or more polyamides (A).

The same applies for "at least one carbon black (B)". In the context of the present invention "at least one carbon black (B)" is to be understood as meaning either precisely one carbon black (B) or else a mixture of two or more carbon blacks (B).

The polyamide composition (PC) comprises in the range from 55 to 99.9 % by weight of the at least one polyamide (A) and in the range from 0.1 to 4 % by weight of the at least one carbon black (B) in each case based on the total weight of the polyamide composition (PC).

It is most preferable when the polyamide composition (PC) comprises in the range from 60 to 99.7 % by weight of the at least one polyamide (A) and in the range from 0.3 to 3 % by weight of the at least one carbon black (B) in each case based on the total weight of the polyamide composition (PC).

The polyamide composition (PC) may be present in any desired form. It is preferable when the polyamide composition (PC) is present in the form of pellets. It is especially preferable when the polyamide composition (PC) is present as pellets having an average particle size in the range from 0.5 to 10 mm, more preferably in the range from 0.8 to 5 mm and most preferably in the range from 1 to 3 mm, determined by microscopy.

The polyamide composition (PC) may further comprise at least one additive (C) in addition to the at least one polyamide (A) and the at least one carbon black (B).

In the context of the present invention "at least one additive (C)" is to be understood as meaning either precisely one additive (C) or else a mixture of two or more additives (C).

The polyamide composition (PC) may comprise for example in the range from 0 to 55 % by weight of the at least one additive (C) based on the total weight of the polyamide composition (PC). It is preferable when the polyamide composition (PC) comprises in the range from 0 to 41 % by weight of the at least one additive (C), especially preferably in the range from 0 to 37 % by weight, in each case based on the total weight of the polyamide composition (PC).

The present invention thus also provides a polyamide composition (PC) in which the polyamide composition (PC) comprises in the range from 0 to 55 % by weight of the at least one additive (C), based on the total weight of the polyamide composition (PC).

It will be appreciated that when the polyamide composition (PC) comprises at least one additive (C) the % by weight values of the at least one polyamide (A) present in the polyamide composition (PC) are correspondingly reduced so that the sum of the % by weight values of the at least one polyamide (A), of the at least one carbon black (B) and of the at least one additive (C) sum to 100%.

It is preferable when the polyamide composition (PC) comprises in the range from 55 to 99.7 % by weight of the at least one polyamide (A), in the range from 0.1 to 4 % by weight of the at least one carbon black (B) and in the range from 0.2 to 41 % by weight of the at least one additive (C) in each case based on the sum of the weight percentages of the at least one polyamide (A), of the at least one carbon black (B) and of the at least one additive (C), preferably based on the total weight of the polyamide composition (PC).

It is most preferable when the polyamide composition (PC) comprises in the range from 60 to 99.4 % by weight of the at least one polyamide (A), in the range from 0.3 to 3 % by weight of the at least one carbon black (B) and in the range from 0.3 to 37 % by weight of the at least one additive (C) in each case based on the sum of the weight percentages of the at least one polyamide (A), of the at least one carbon black (B) and of the at least one additive (C), preferably based on the total weight of the polyamide composition (PC).

The % by weight values of the at least one polyamide (A) present in the polyamide composition (PC), of the at least one carbon black (B) and of the optionally present at least one additive (C) thus typically sum to 100%.

Suitable additives (C) are known per se to those skilled in the art. The additives (C) are preferably selected from the group consisting of stabilizers, dyes, pigments, fillers, reinforcers, impact modifiers and plasticizers.

The present invention thus also provides a polyamide composition (PC) in which the polyamide composition (PC) further comprises at least one additive (C) selected from the group consisting of stabilizers, dyes, pigments, fillers, reinforcers, impact modifiers and plasticizers.

Suitable stabilizers are for example phenol, talc, alkaline earth metal silicates, sterically hindered phenols, phosphites and alkaline earth metal glycerophosphates.

Suitable dyes and pigments are for example transition metal oxides or nigrosins.

Suitable fillers are for example glass beads, glass fibers, kaolin, wollastonite, muscovite, phlogopite, carbon fibers, carbon nanotubes and chalk.

Suitable impact modifiers are for example polymers based on ethylene propylene (EPM) or ethylene propylene diene (EPDM) rubbers or thermoplastic urethanes and also ionomers or styrene-based rubbers.

Suitable plasticizers are for example dioctyl phthalate, dibenzyl phthalate, butyl benzyl phthalate, hydrocarbon oils, N-(n-butyl)-benzenesulfonamide and ortho- and para-tolylethylsulfonamide.

In a preferred embodiment, the polyamide composition (PC) does not comprise any fibers such as glass fibers or carbon fibers. In a more preferred embodiment, the polyamide composition (PC) does not comprise any fillers.

The present invention thus also provides a polyamide composition (PC) in which the polyamide composition (PC) does not comprise any fibers.

### Polyamide (Component (A))

The polyamide composition (PC) comprises at least one polyamide (A).

Suitable polyamides (A) generally have a viscosity number of 70 to 350 ml/g, preferably of 70 to 240 ml/g. The viscosity number is determined according to the invention from a 0.5 wt% solution of the polyamide (A) in 96 wt% sulfuric acid at 25°C according to ISO 307.

Preferred polyamides (A) are semicrystalline polyamides. Suitable polyamides (A) have a weight-average molecular weight (M_{W}) in the range from 500 to 2 000 000 g/mol, preferably in the range from 5 000 to 500 000 g/mol and particularly preferably in the range from 10 000 to 100 000 g/mol. The weight-average molecular weight (M_{W}) is determined according to ASTM D4001.

Suitable polyamides (A) include for example polyamides (A) which derive from lactams having 7 to 13 ring members. Suitable polyamides (A) further include polyamides (A) obtained by reaction of dicarboxylic acids with diamines.

Examples of polyamides (A) which derive from lactams include polyamides which derive from polycaprolactam, polycaprylolactam and/or polylaurolactam.

Suitable polyamides (A) further include those obtainable from ω-aminoalkyl nitriles. A preferred ω-aminoalkylnitrile is aminocapronitrile which results in polyamide 6. Furthermore, dinitriles may be reacted with diamine. Preference is given here to adipodinitrile and hexamethylenediamine which polymerize to afford polyamide 66. The polymerization of nitriles is effected in the presence of water and is also known as direct polymerization.

When polyamides (A) obtainable from dicarboxylic acids and diamines are used, dicarboxylic acid alkanes (aliphatic dicarboxylic acids) having 4 to 36 carbon atoms, preferably 6 to 12 carbon atoms and particularly preferably 6 to 10 carbon atoms may be employed. Aromatic dicarboxylic acids are also suitable.

Examples of dicarboxylic acids include adipic acid, azelaic acid, sebacic acid, dodecanedioic acid and also terephthalic acid and/or isophthalic acid.

Suitable diamines include for example alkanediamines having 4 to 36 carbon atoms, preferably alkanediamines having 6 to 12 carbon atoms, in particular alkanediamines having 6 to 8 carbon atoms, and aromatic diamines, for example m-xylylenediamine, di(4-aminophenyl)methane, di(4-aminocyclohexyl)methane, 2,2-di(4-aminophenyl)propane, 2,2-di(4-aminocyclohexyl)propane and 1,5-diamino-2-methylpentane.

Preferred polyamides (A) are polyhexamethylene adipamide, polyhexamethylene sebacamide and polycaprolactam and also copolyamide 6/66, in particular having a proportion of caprolactam units of 5 to 95 wt%.

Also suitable are polyamides (A) obtainable by copolymerization of two or more of the monomers mentioned hereinabove and hereinbelow or mixtures of a plurality of polyamides (A) in any desired mixing ratio. Particularly preferred mixtures are mixtures of polyamide 66 with other polyamides (A), in particular copolyamide 6/66.

Suitable polyamides (A) are accordingly aliphatic, semiaromatic or aromatic polyamides (A). The term "aliphatic polyamides" is to be understood as meaning that the polyamides (A) are constructed exclusively from aliphatic monomers. The term "semiaromatic polyamides" is to be understood as meaning that the polyamides (A) are constructed from both aliphatic and aromatic monomers. The term "aromatic polyamides" is to be understood as meaning that the polyamides (A) are constructed exclusively from aromatic monomers.

The no exhaustive list which follows comprises the abovementioned, and further, polyamides (A) suitable for use in the process according to the invention and the monomers present.

### AB polymers:

| | |
|---|---|
| PA 4 | pyrrolidone |
| PA 6 | ε-caprolactam |
| PA 7 | enantholactam |
| PA 8 | caprylolactam |
| PA 9 | 9-aminopelargonic acid |
| PA 11 | 11-aminoundecanoic acid |
| PA 12 | laurolactam |

### AA/BB polymers:

| | |
|---|---|
| PA 46 | tetramethylenediamine, adipic acid |
| PA 66 | hexamethylenediamine, adipic acid |
| PA 69 | hexamethylenediamine, azelaic acid |
| PA 610 | hexamethylenediamine, sebacic acid |
| PA 612 | hexamethylenediamine, decanedicarboxylic acid |
| PA 613 | hexamethylenediamine, undecanedicarboxylic acid |
| PA 1212 | dodecane-1,12-diamine, decanedicarboxylic acid |
| PA 1313 | tridecane-1,13-diamine, undecanedicarboxylic acid |
| PA 6T | hexamethylenediamine, terephthalic acid |
| PA 9T | nonyldiamine, terephthalic acid |
| PA MXD6 | m-xylylenediamine, adipic acid |

| | |
|---|---|
| PA 6I | hexamethylenediamine, isophthalic acid |
| PA 6-3-T | trimethylhexamethylenediamine, terephthalic acid |
| PA 6/6T | (see PA 6 and PA 6T) |
| PA 6/66 | (see PA 6 and PA 66) |
| PA 6/12 | (see PA 6 and PA 12) |
| PA 66/6/610 | (see PA 66, PA 6 and PA 610) |
| PA 6I/6T | (see PA 6I and PA 6T) |
| PA PACM 12 | diaminodicyclohexylmethane, laurolactam |
| PA 6I/6T/PACM | as PA 6I/6T and diaminodicyclohexylmethane |
| PA 12/MACMI | laurolactam, dimethyldiaminodicyclohexylmethane, isophthalic acid |
| PA 12/MACMT | laurolactam, dimethyldiaminodicyclohexylmethane, terephthalic acid |
| PA PDA-T | phenylenediamine, terephthalic acid |

The present invention thus also provides a polyamide composition (PC) in which the at least one polyamide (A) present in the polyamide composition (PC) is selected from the group consisting of PA 4, PA 6, PA 7, PA 8, PA 9, PA 11, PA 12, PA 46, PA 66, PA 69, PA 510, PA 610, PA 612, PA 613, PA 1212, PA1313, PA 6T, PA MXD6, PA 6I, PA 6-3-T, PA 6/6T, PA 6/66, PA 66/6, PA 6/12, PA 66/6/610, PA 6I/6T, PA PACM 12, PA 6I/6T/PACM, PA 12/MACMI, PA 12/MACMT, PA PDA-T and copolyamides composed of two or more of the abovementioned polyamides.

It is preferable when the at least one polyamide (A) is selected from the group consisting of polyamide 6 (PA 6), polyamide 66 (PA 66), polyamide 6/66 (PA 6/66), polyamide 66/6 (PA 66/6), polyamide 610 (PA 610), polyamide 6/6T (PA 6/6T), polyamide 12 (PA12) and polyamide 1212 (PA1212).

Particularly preferred polyamides (A) are polyamide 6 (PA 6) and/or polyamide 66 (PA 66), polyamide 6 (PA 6) being especially preferred.

The present invention thus also provides a polyamide composition (PC) in which the at least one polyamide (A) present in the polyamide composition (PC) is selected from the group consisting of polyamide 6 (PA 6), polyamide 66 (PA 66), polyamide 6/66 (PA 6/66), polyamide 66/6 (PA 66/6), polyamide 610 (PA 610), polyamide 6/6T (PA 6/6T), polyamide 12 (PA12) and polyamide 1212 (PA1212).

### Carbon black (Component (B))

The polyamide composition (PC) comprises at least one carbon black (B), wherein the surface layer of the at least one carbon black (B) comprises not more than 2 % by weight of oxygen, based on the total weight of the surface layer of the at least one carbon black (B), and wherein the weight of oxygen in the surface layer is measured by X-ray photoelectron spectroscopy at an X-ray penetration depth of 2 to 10 nm.

The term "surface layer" is known to those skilled in the art.

In the context of the present invention the term "surface layer" is determined by the X-ray penetration depth and means the layer between a distance of 2 to 10 nm from the surface of the at least one carbon black (B), and the surface of the at least one carbon black (B).

It is preferable when the surface layer of the at least one carbon black (B) comprises not more than 1.5 % by weight of oxygen, based on the total weight of the surface layer of the at least one carbon black (B), and wherein the weight of oxygen in the surface layer is measured by X-ray photoelectron spectroscopy at an X-ray penetration depth of 2 to 10 nm.

It is more preferable when the surface layer of the at least one carbon black (B) comprises not more than 1.25 % by weight of oxygen, based on the total weight of the surface layer of the at least one carbon black (B), and wherein the weight of oxygen in the surface layer is measured by X-ray photoelectron spectroscopy at an X-ray penetration depth of 2 to 10 nm.

Further, it is preferable when the surface layer of the at least one carbon black (B) comprises not more than 1 % by weight of nitrogen, based on the total weight of the surface layer of component (B), and wherein the weight of nitrogen in the surface layer is measured by X-ray photoelectron spectroscopy at an X-ray penetration depth of 2 to 10 nm.

It is more preferable when the surface layer of the at least one carbon black (B) comprises not more than 0.8 % by weight of nitrogen, based on the total weight of the surface layer of component (B), and wherein the weight of nitrogen in the surface layer is measured by X-ray photoelectron spectroscopy at an X-ray penetration depth of 2 to 10 nm.

It is most preferable when the surface layer of the at least one carbon black (B) comprises not more than 0.6 % by weight of nitrogen, based on the total weight of the surface layer of component (B), and wherein the weight of nitrogen in the surface layer is measured by X-ray photoelectron spectroscopy at a X-ray penetration depth of 2 to 10 nm.

The present invention thus also provides a polyamide composition (PC) in which the surface layer of component (B) comprises not more than 1 % by weight of nitrogen, based on the total weight of the surface layer of component (B), and wherein the weight of nitrogen in the surface layer is measured by X-ray photoelectron spectroscopy at an X-ray penetration depth of 2 to 10 nm.

The weight percentages of the oxygen and the nitrogen comprised in the surface layer of the at least one carbon black (B) comprised in the polyamide composition (PC) are determined by X-ray photoelectron spectroscopy (XPS).

X-ray photoelectron spectroscopy (XPS) is a quantitative spectroscopic technique that can measure the elemental composition, empirical formula, chemical state and electronic state of the elements that exist within a sample, in the present case a sample of the at least one carbon black (B). By irradiating the sample with a beam of X-rays while simultaneously measuring the kinetic energy and number of electrons that escape from the surface layer of the sample, XPS spectra may be obtained. In the present case, the X-ray has a penetration depth of 2 to 10 nm which means that electrons can escape from not more than 2 to 10 nm below the surface of the sample. XPS analysis commonly employs monochromatic aluminum Kot (AIKa) X-rays, which may be generated by bombarding an aluminum anode surface with a focused electron beam. A fraction of the generated AlKa X-rays is then intercepted by a focusing monochromator and a narrow X-ray energy band is focused onto the analysis site on the sample surface. The X-ray flux of the AlKa X-rays at the sample surface depends on the electron beam current, the thickness and integrity of the aluminum anode surface, and crystal quality, size, and stability of the monochromator.

Carbon blacks are known in principle to those skilled in the art.

The at least one carbon black (B) preferably comprised in the inventive polyamide composition (PC) generally has a low sieve residue, a low volume resistivity and a low pour density.

In a preferred embodiment, the at least one carbon black (B) has a 325 mesh sieve residue of less than 50 ppm, preferably of less than 20 ppm and more preferably of less than 10 ppm. The sieve residue is determined according to ASTM D1514-00.

The present invention thus also provides a polyamide composition (PC) in which component (B) has a 0,044 mm (325 mesh) sieve residue of less than 50 ppm.

Further, the at least one carbon black (B) preferably has a volume resistivity of less than 100 Ω * cm, more preferably of less than 50 Ω * cm and most preferably of less than 20 Ω * cm.

The present invention thus also provides a polyamide composition (PC) in which component (B) has a volume resistivity of less than 100 Ω * cm.

The at least one carbon black (B) has preferably a pour density of less than 300 g/l and more preferably of less than 200 g/l. The pour density is determined according to ASTM D1513-99.

The present invention thus also provides a polyamide composition (PC) in which component (B) has a pour density of less than 300 g/l.

The at least one carbon black (B) may be present in any desired form. It is preferable when component (B) is present in the form of a powder. It is especially preferable when component (B) is present as powder having an average particle size (D50 value) in the range from 5 to 70 nm, more preferably in the range from 10 to 60 nm and most preferably in the range from 15 to 50 nm.

The present invention thus also provides a polyamide composition (PC) in which component (B) has an average diameter in the range from 5 nm to 70 nm.

In the context of the present invention "D50 value" is to be understood as meaning the particle size at which 50 vol% of the particles based on the total volume of the particles are smaller than or equal to the D50 value and 50 vol% of the particles based on the total volume of the particles are larger than the D50 value.

Suitable carbon blacks are for example partial combustion carbon blacks.

The present invention thus also provides a polyamide composition (PC) in which component (B) is a partial combustion carbon black.

Partial combustion carbon blacks preferably have a partially graphitic structure and are preferably produced by a process based on partial oil oxidation of carbochemical and petrochemical origin with a low velocity, no quench and no additives.

The at least one carbon black (B) comprised in the polyamide composition (PC) may be used in the polyamide composition (PC) for increasing the shrinkage of moulded articles made from said polyamide composition (PC).

The present invention thus also provides the use of carbon black in a polyamide composition (PC) for increasing the shrinkage of moulded articles made from said polyamide composition (PC), wherein the surface layer of the at least one carbon black (B) comprises not more than 2 % by weight of oxygen, based on the total weight of the surface layer of the at least one carbon black (B), and wherein the weight of oxygen in the surface layer is measured by X-ray photoelectron spectroscopy at an X-ray penetration depth of 2 to 10 nm.

### Production of the polyamide composition (PC)

The polyamide composition (PC) may be produced by any method known to those skilled in the art.

Preferably, it is produced by compounding.

Processes for compounding are known to those skilled in the art.

For example the at least one polyamide (A), the at least one carbon black (B) and optionally the at least one additive (C) may be compounded in an extruder and subsequently extruded therefrom, optionally with subsequent extrudate pelletization.

To prepare the polyamide composition (PC), the temperature of the extruder during the compounding of the components (A), (B) and optionally (C) can be any temperature and is usually in the range from 200 to 350°C, preferably in the range from 220 to 330°C and particularly preferably in the range from 240 to 310°C.

The barrel temperature of the extruder can be higher than the temperature of the components in the extruder, and it is equally possible that the barrel temperature of the extruder is lower than the temperature of the components in the extruder. By way of example, it is possible that the barrel temperature of the extruder is initially higher than the temperature of the components in the extruder when the components are being heated. When the components in the extruder are being cooled, it is possible that the barrel temperature of the extruder is lower than the temperature of the components in the extruder. The temperatures given in the present invention and referring to the extruder are meant to be barrel temperatures of the extruder. "Barrel temperature of the extruder" means the temperature of the barrel of the extruder. The barrel temperature of the extruder is therefore the temperature of the external wall of the extruder barrel. As extruder, any extruder known to the skilled person is suitable which can be used at the temperatures and pressures during the compounding. In general, the extruder can be heated to at least the temperature, at which the at least one polyamide (A), the at least one carbon black (B) and, optionally, the at least one additive (C) are compounded.

The extruder may be a single-, twin or multiple-screw extruder. Twin-screw extruders are preferred. Twin-screw extruders are also known as double screw extruders. The twin-screw extruders may be corotating or counterrotating. Single-screw extruders, twin-screw extruders and multiple-screw extruders are known to the skilled person and are for example described in C. Rauwendaal: Polymer extrusion, Carl Hanser Verlag GmbH & Co. KG, 5thedition (16 January 2014).

The extruder may also comprise further devices, for example mixing elements or kneading elements. Mixing elements serve for the mixing of the individual components comprised in the extruder. Suitable mixing elements are known to the skilled person and are, by way of example, static mixing elements or dynamic mixing elements. Kneading elements likewise serve for the mixing of the individual components comprised in the extruder. Suitable kneading elements are known to the person skilled in the art and are, by way of example, kneading screws or kneading blocks, for example disk kneading blocks or shoulder kneading blocks. The components (A), (B) and optionally (C) can be added to the extruder in succession or concurrently and are mixed and compounded in the extruder to obtain the polyamide composition (PC).

The at least one carbon black (B) can be introduced as powder or in the form of a masterbatch (MB) into the extruder. Preferably, the at least one carbon black (B) is introduced in the form of a masterbatch (MB) into the extruder.

The masterbatch (MB) comprises preferably the at least one polyamide (A) and the at least one carbon black (B).

In a preferred embodiment, the at least one polyamide (A), the masterbatch (MB) and optionally the at least one additive (C) are compounded in a twin-screw extruder, wherein the masterbatch (MB) comprises the at least one polyamide (A) and the at least one carbon black (B).

The present invention thus also provides a process for producing a polyamide composition (PC), wherein component (A), a masterbatch (MB) and optionally component (C) are compounded in a twin-screw extruder, wherein the masterbatch (MB) comprises component (A) and component (B).

Preferably, the masterbatch (MB) comprises from 60 to 80 % by weight of component (A) and in the range from 20 to 40 % by weight of component (B), more preferably from 60 to 75 % by weight of component (A) and in the range from 25 to 40 % by weight of component (B), most preferably from 65 to 75 % by weight of component (A) and in the range from 25 to 35 % by weight of component (B), based in each case on the total weight of the masterbatch (MB)
The present invention thus also provides a process in which the masterbatch (MB) comprises from 60 to 80 % by weight of component (A) and in the range from 20 to 40 % by weight of component (B), based in each case on the total weight of the masterbatch (MB).

Preferably, the masterbatch (MB) is prepared by compounding the at least one polyamide (A) and the at least one carbon black (B). For example the at least one polyamide (A) and the at least one carbon black (B) are compounded in an extruder and subsequently extruded therefrom, optionally with subsequent extrudate pelletization.

To prepare the masterbatch (MB), the temperature of the extruder during the compounding of the components (A) and (B) can also be any temperature and is usually in the range from 200 to 350°C, preferably in the range from 220 to 330°C and particularly preferably in the range from 240 to 310°C.

In case the polyamide composition (PC) is produced by subsequent extrudate pelletization, the pellets have an average particle size in the range from 0.5 to 10 mm, more preferably in the range from 0.8 to 5 mm and most preferably in the range from 1 to 3 mm, determined by microscopy.

The same holds true for the masterbatch (MB): In case the masterbatch (MB) is produced by subsequent extrudate pelletization, the pellets also have an average particle size in the range from 0.5 to 10 mm, more preferably in the range from 0.8 to 5 mm and most preferably in the range from 1 to 3 mm, determined by microscopy.

### Production of the moulded article comprising the polyamide composition (PC)

The moulded articles comprising the polyamide composition (PC) can be produced by forming the polyamide composition (PC).

The present invention thus also provides a process for the production of a moulded article by forming the polyamide composition (PC).

The polyamide composition (PC) may be formed by any methods known to the skilled person to produce the moulded articles. Examples of suitable forming methods include injection moulding, extrusion, calendering, rotomoulding, and blow moulding. The polyamide composition (PC) is preferably formed by injection moulding and/or extrusion, more preferably by injection moulding.

If the moulded article is prepared via injection moulding, the polyamide composition (PC) is injection-moulded on an injection molding machine at a melt temperature in the range from 230 to 350°C, preferably in the range from 240 to 320°C, and most preferably in the range from 250 to 300°C to give moulded parts.

The moulded article may have any of the forms known to the skilled person. It may be present, for example, in the form of a film, a sheet or a finished component. In a preferred embodiment, the moulded article is not present in the form of a film.

Therefore, the present invention also provides a moulded article which is not present in the form of a film.

"Film" in the context of the present invention refers to a planar moulded article having a thickness in the range from 20 µm to 500 µm, preferably in the range from 50 µm to 300 µm. "Sheet" refers to a planar moulded article having a thickness in the range from > 0.5 mm to 100 mm.

Finished components are, for example, components for the construction sector, auto making, marine construction, rail vehicle construction, container construction, household appliances, for sanitary installations and/or for aerospace travel. Preferred finished components are, for example, dashboards, packaging films, and monofilaments, for fishing nets or fishing lines, for example.

The present invention thus also provides a moulded article comprising the polyamide composition (PC).

Preferably, the moulded article has a volume resistivity of at least 5 * 10¹¹ Ω * m, more preferably of at least 1 * 10¹² Ω * m and most preferably of at least 2 * 10¹² Ω * m.

The present invention thus also provides a moulded article which has a volume resistivity of at least 5 * 10¹¹ Ω * m.

The volume resistivity was determined by first determining the electrical conductivity as volume conductivity as the volume resistivity is the reciprocal value of the volume conductivity. The volume conductivity was determined using a 4-point measuring apparatus. For each moulded article, the measurement was carried out on five specimens having the dimensions 77 × 12 × 4 mm³ which had been sawn from moulded articles. To achieve good contact between specimen and electrodes, four silver electrodes were painted directly on the specimen using a conductive silver paste (Leitsilber 200 from Hans Wohlbring GmbH). A Current Source 225 was used as current source, a Programmable Electrometer 617 was used as voltage measuring instrument and a Multimeter 1000 was used as current measuring instrument, in each case from Keithley Instruments.

The invention is elucidated in detail by examples hereinafter, without restricting it thereto.

### Examples

The following components were employed:
*Polyamide (A):*

| | | |
|---|---|---|
| (A1) | Polyamide 6 (PA 6) | (Ultramid^{®} B27E; BASF SE) |

*Carbon black (B):*

| | | |
|---|---|---|
| (B1) | Ensaco^{®}250G | (Imerys Graphite & Carbon Switzerland Ltd.) |
| (B2) | Ensaco^{®}360G | (Imerys Graphite & Carbon Switzerland Ltd.) |
| (B3) | Black Pearls^{®} 880 | (Cabot Corporation) |

*Additive (C)*

| | |
|---|---|
| (C1) | Glass Fiber ECS 03 T-249 (Nippon Electric Glass) |
| (C2) | N,N'-Ethylenebis(stearamide) |
| (C3) | Masterbatch comprising Cul and KI |

Table 1 states the essential parameters of the polyamide used (component (A)) and table 2 states the essential parameters of the carbon blacks used (component (B)).

**Table 1**

| | **Type** | **AEG [mmol/kg]** | **CEG [mmol/kg]** | **T_{M} [°C]** | **T_{G} [°C]** | **Zero shear rate viscosity η₀ at 240°C [Pas]** |
|---|---|---|---|---|---|---|
| (A1) | PA 6 | 36 | 54 | 220.0 | 53 | 399 |

AEG indicates the amino end group concentration. This is determined by means of titration. For determination of the amino end group concentration (AEG), 1 g of the component (semicrystalline polyamide) was dissolved in 30 mL of a phenol/methanol mixture (volume ratio of phenol:methanol 75:25) and then subjected to potentiometric titration with 0.2 N hydrochloric acid in water.

The CEG indicates the carboxyl end group concentration. This is determined by means of titration. For determination of the carboxyl end group concentration (CEG), 1 g of the component (semicrystalline polyamide) was dissolved in 30 mL of benzyl alcohol. This was followed by visual titration at 120°C with 0.05 N potassium hydroxide solution in water.

The melting temperature (T_{M}) of the semicrystalline polyamides and the glass transition temperature (T_{G}) were each determined by means of differential scanning calorimetry.

For determination of the melting temperature (T_{M}), as described above, a first heating run (H1) at a heating rate of 20 K/min was measured. The melting temperature (T_{M}) then corresponded to the temperature at the maximum of the melting peak of the heating run (H1).

For determination of the glass transition temperature (T_{G}), after the first heating run (H1), a cooling run (C) and subsequently a second heating run (H2) were measured. The cooling run was measured at a cooling rate of 20 K/min; the first heating run (H1) and the second heating run (H2) were measured at a heating rate of 20 K/min. The glass transition temperature (T_{G}) was then determined as described above at half the step height of the second heating run (H2).

The zero shear rate viscosity η₀ was determined with a "DHR-1" rotary viscometer from TA Instruments and a plate-plate geometry with a diameter of 25 mm and a plate separation of 1 mm. Unequilibrated samples were dried at 80°C under reduced pressure for 7 days and these were then analysed with a time-dependent frequency sweep (sequence test) with an angular frequency range of 500 to 0.5 rad/s. The following further analysis parameters were used: deformation: 1.0%, analysis temperature: 240°C, analysis time: 20 min, preheating time after sample preparation: 1.5 min.

**Table 2**

| | **Particle size [nm]** | **325 mesh sieve residue [ppm]** | **Oxygen [wt%]** | **Nitrogen wt%]** |
|---|---|---|---|---|
| (B1) | < 30 | 2 | 1.0 | 0.5 |
| (B2) | < 30 | 10 | 1.0 | 0.5 |
| (B3) | > 100 | < 100 | 6.7 | 1.6 |

The 325 mesh sieve residue was determined according to ASTM D1514-00

The weight percentages of the oxygen and nitrogen are determined by X-ray photoelectron spectroscopy at a X-ray penetration depth of 2 to 10 nm.

### Production of the masterbatch (MB)

The components reported in table 3 were compounded in the ratio reported in table 3 in a twin-screw extruder (ZE25A UXTI) at 280 rpm, a barrel temperature of 260°C and a throughput of 11.2 kg/h with subsequent extrudate pelletization.

**Table 3**

| **Example** | **(A1) [wt%]** | **(B1) [wt%]** | **(B2) [wt%]** | **(B3) [wt%]** |
|---|---|---|---|---|
| (MB1) | 70 | 30 | - | - |
| (MB2) | 70 | - | 30 | - |
| (MB3) | 70 | - | - | 30 |

### Production of the polyamide composition (PC)

The components reported in table 3 were compounded in the ratio reported in table 4 in a twin-screw extruder (ZE25A UXTI) at 280 rpm, a barrel temperature of 260°C and a throughput of 11.2 kg/h with subsequent extrudate pelletization.

**Table 4**

| **Example** | **E1** | **E2** | **E3** | **C4** | **C5** | **C6** |
|---|---|---|---|---|---|---|
| (A1) **[wt%]** | 62.34 | 60.68 | 60.68 | 64.01 | 62.34 | 60.68 |
| (M1) **[wt%]** | 1.67 | 3.33 | - | - | - | - |
| (M2) **[wt%]** | - | - | 3.33 | - | - | - |
| (M3) **[wt%]** | - | - | - | - | 1.67 | 3.33 |
| (C1) **[wt%]** | 35.00 | 35.00 | 35.00 | 35.00 | 35.00 | 35.00 |
| (C2) **[wt%]** | 0.30 | 0.30 | 0.30 | 0.30 | 0.30 | 0.30 |
| (C3) **[wt%]** | 0.69 | 0.69 | 0.69 | 0.69 | 0.69 | 0.69 |

### Production of moulded parts

The above obtained pellets were injection-moulded on an injection molding machine at a melt temperature of 280°C to give moulded parts of a thickness of 2 mm, and of dimensions of 60×60 mm.

Subsequently, the properties of the moulded parts obtained were determined. The moulded parts obtained were tested in the dry state after drying at 80°C for 336 h under reduced pressure. The results are shown in table 5.

The shrinkage was determined according to ISO 294.

To measure Δ creep, the moulded parts were drawn up to a yield stress of 70 % and the elongation of the moulded parts was determined. After 12 hours, the elongation of the moulded parts was determined again. The difference of the two elongation values corresponds to Δ creep.

Tensile strength, tensile modulus of elasticity and elongation at break were determined according to ISO 527-1:2012.

The volume resistivity was determined by first determining the electrical conductivity as volume conductivity as the volume resistivity is the reciprocal value of the volume conductivity. The volume conductivity was determined using a 4-point measuring apparatus. For each moulded article, the measurement was carried out on five specimens having the dimensions 77 × 12 × 4 mm³ which had been sawn from moulded articles. To achieve good contact between specimen and electrodes, four silver electrodes were painted directly on the specimen using a conductive silver paste (Leitsilber 200 from Hans Wohlbring GmbH). A Current Source 225 was used as current source, a Programmable Electrometer 617 was used as voltage measuring instrument and a Multimeter 1000 was used as current measuring instrument, in each case from Keithley Instruments.

**Table 5**

| **Example** | **E1** | **E2** | **E3** | **C4** | **C5** | **C6** |
|---|---|---|---|---|---|---|
| Shrinkage Parallel **[%]** | 0.27 | 0.28 | 0.29 | 0.24 | 0.24 | 0.24 |
| Shrinkage Perpendicular **[%]** | 0.88 | 0.91 | 0.90 | 0.75 | 0.79 | 0.80 |
| Tensile modulus of elasticity **[MPa]** | 11 090 | 11 140 | 11 150 | 10 990 | 10 790 | 11 560 |
| Tensile strength **[MPa]** | 177 | 176 | 186 | 182 | 173 | 177 |
| Elongation at break [%] | 3.0 | 3.0 | 3.4 | 3.8 | 3.4 | 3.4 |
| Δ Creep**[%]** | 0.79 | 0.81 | | 1.07 | 1.03 | |
| Volume resistivity **[Ω** * **m]** | 3.2 * 10¹² | 8.2 * 10¹¹ | | 3.4 * 10¹² | 3.4 * 10¹² | |

It is clearly apparent from table 5 that the use of at least one carbon black (B), wherein the surface of the at least one carbon black (B) comprises not more than 2 % by weight of oxygen, based on the total weight of the surface of the at least one carbon black (B), in a polyamide composition results in a higher shrinkage of the mouldings comprising this polyamide composition (PC). The mouldings show, despite the high shrinkage, a high creep resistance as well as good mechanical properties like a high tensile modulus of elasticity and a high tensile strength.

## Claims

1. A polyamide composition (PC) comprising the following components (A) and (B)
(A) at least one polyamide,
(B) at least one carbon black,
wherein the surface layer of component (B) comprises not more than 2 % by weight of oxygen, based on the total weight of the surface layer of component (B), and wherein the weight of oxygen in the surface layer is measured by X-ray photoelectron spectroscopy at an X-ray penetration depth of 2 to 10 nm, wherein the polyamide composition (PC) comprises in the range from 55 to 99.9 % by weight of the at least one polyamide (A) and in the range from 0.1 to 4 % by weight of the at least one carbon black (B), based on the total weight of the polyamide composition (PC).

2. Polyamide composition (PC) according to claim 1, wherein the polyamide composition (PC) comprises in the range from 60 to 99.7 % by weight of component (A) and in the range from 0.3 to 3 % by weight of component (B), based in each case on the total weight of the polyamide composition (PC).

3. Polyamide composition (PC) according to claim 1 or 2, wherein the surface layer of component (B) comprises not more than 1 % by weight of nitrogen, based on the total weight of the surface layer of component (B), and wherein the weight of nitrogen in the surface layer is measured by X-ray photoelectron spectroscopy at an X-ray penetration depth of 2 to 10 nm.

4. Polyamide composition (PC) according to any of claims 1 to 3, wherein component (B) is a partial combustion carbon black.

5. Polyamide composition (PC) according to any of claims 1 to 4, wherein component (B) has an average diameter in the range from 5 nm to 70 nm.

6. Polyamide composition (PC) according to any of claims 1 to 5, wherein the at least one polyamide (A) present in the polyamide composition (PC) is selected from the group consisting of PA 4, PA 6, PA 7, PA 8, PA 9, PA 11, PA 12, PA 46, PA 66, PA 69, PA 510, PA 610, PA 612, PA 613, PA 1212, PA1313, PA 6T, PA MXD6, PA 6I, PA 6-3-T, PA 6/6T, PA 6/66, PA 66/6, PA 6/12, PA 66/6/610, PA 6I/6T, PA PACM 12, PA 6I/6T/PACM, PA 12/MACMI, PA 12/MACMT, PA PDA-T and copolyamides composed of two or more of the abovementioned polyamides.

7. Polyamide composition (PC) according to any of claims 1 to 6, wherein the at least one polyamide (A) present in the polyamide composition (PC) is selected from the group consisting of polyamide 6 (PA 6), polyamide 66 (PA 66), polyamide 6/66 (PA 6/66), polyamide 66/6 (PA 66/6), polyamide 610 (PA 610), polyamide 6/6T (PA 6/6T), polyamide 12 (PA12) and polyamide 1212 (PA1212).

8. Polyamide composition (PC) according to any of claims 1 to 7, wherein the polyamide composition (PC) further comprises at least one additive (C) selected from the group consisting of stabilizers, dyes, pigments, fillers, reinforcers, impact modifiers and plasticizers.

9. Polyamide composition (PC) according to claim 8, wherein the polyamide composition (PC) comprises in the range from 0 to 55 % by weight of the at least one additive (C), based on the total weight of the polyamide composition (PC).

10. Polyamide composition (PC) according to any of claims 1 to 9, wherein component (B) has a 0,044 mm (325 mesh) sieve residue of less than 50 ppm.

11. Polyamide composition (PC) according to any of claims 1 to 10, wherein component (B) has a volume resistivity of less than 100 Ω * cm.

12. Polyamide composition (PC) according to any of claims 1 to 11, wherein component (B) has a pour density of less than 300 g/l.

13. A process for producing a polyamide composition (PC) according to any of claims 1 to 12, wherein component (A), a masterbatch (MB) and optionally component (C) are compounded in a twin-screw extruder, wherein the masterbatch (MB) comprises component (A) and component (B).

14. The process according to claim 13, wherein the masterbatch (MB) comprises from 60 to 80 % by weight of component (A) and in the range from 20 to 40 % by weight of component (B), based in each case on the total weight of the masterbatch (MB).

15. A process for the production of a moulded article by forming the polyamide composition (PC) according to claims 1 to 12.

16. A moulded article comprising the polyamide composition (PC) according to claims 1 to 12.

17. Moulded article according to claim 16, wherein the moulded article has a volume resistivity of at least 5 * 10¹¹ Ω * m.

18. The use of at least one carbon black (B) in a polyamide composition (PC) for increasing the shrinkage of moulded articles made from said polyamide composition (PC), wherein the surface layer of the at least one carbon black (B) comprises not more than 2 % by weight of oxygen, based on the total weight of the surface layer of the at least one carbon black (B), and wherein the weight of oxygen in the surface layer is measured by X-ray photoelectron spectroscopy at an X-ray penetration depth of 2 to 10 nm.

## Patentansprüche

1. Polyamidzusammensetzung (PC), welche die folgenden Bestandteile (A) und (B) umfasst
(A) mindestens ein Polyamid,
(B) mindestens einen Rußbestandteil,
wobei die Oberflächenschicht des Bestandteils (B) nicht mehr als 2 Gewichts-% an Sauerstoff umfasst, bezogen auf das Gesamtgewicht der Oberflächenschicht des Bestandteils (B), und wobei das Gewicht an Sauerstoff in der Oberflächenschicht mittels Röntgen-Photoelektronenspektroskopie bei einer Röntgenstrahlen-Eindringtiefe von 2 bis 10 nm gemessen wird, wobei die Polyamidzusammensetzung (PC) im Bereich von 55 bis 99,9 Gewichts-% an dem mindestens einen Polyamid (A) und im Bereich von 0,1 bis 4 Gewichts-% an dem mindestens einen Rußbestandteil (B) umfasst, bezogen auf das Gesamtgewicht der Polyamidzusammensetzung (PC).

2. Polyamidzusammensetzung (PC) gemäß Anspruch 1, wobei die Polyamidzusammensetzung (PC) im Bereich von 60 bis 99,7 Gewichts-% an Bestandteil (A) und im Bereich von 0,3 bis 3 Gewichts-% an Bestandteil (B) umfasst, jeweils bezogen auf das Gesamtgewicht der Polyamidzusammensetzung (PC).

3. Polyamidzusammensetzung (PC) gemäß Anspruch 1 oder 2, wobei die Oberflächenschicht des Bestandteils (B) nicht mehr als 1 Gewichts-% an Stickstoff umfasst, bezogen auf das Gesamtgewicht der Oberflächenschicht des Bestandteils (B), und wobei das Gewicht an Stickstoff in der Oberflächenschicht mittels Röntgen-Photoelektronenspektroskopie bei einer Röntgenstrahlen-Eindringtiefe von 2 bis 10 nm gemessen wird.

4. Polyamidzusammensetzung (PC) gemäß einem beliebigen der Ansprüche 1 bis 3, wobei es sich bei dem Bestandteil (B) um einen Rußbestandteil aus unvollständiger Verbrennung handelt.

5. Polyamidzusammensetzung (PC) gemäß einem beliebigen der Ansprüche 1 bis 4, wobei der Bestandteil (B) einen durchschnittlichen Durchmesser im Bereich von 5 nm bis 70 nm hat.

6. Polyamidzusammensetzung (PC) gemäß einem beliebigen der Ansprüche 1 bis 5, wobei das mindestens eine Polyamid (A), welches in der Polyamidzusammensetzung (PC) vorliegt, aus der Gruppe ausgewählt ist, die aus PA 4, PA 6, PA 7, PA 8, PA 9, PA 11, PA 12, PA 46, PA 66, PA 69, PA 510, PA 610, PA 612, PA 613, PA 1212, PA1313, PA 6T, PA MXD6, PA 61, PA 6-3-T, PA 6/6T, PA 6/66, PA 66/6, PA 6/12, PA 66/6/610, PA 6I/6T, PA PACM 12, PA 61/6T/PACM, PA 12/MACMI, PA 12/MACMT, PA PDA-T und Copolyamiden besteht, welche aus zwei oder mehreren der oben erwähnten Polyamide zusammengesetzt sind.

7. Polyamidzusammensetzung (PC) gemäß einem beliebigen der Ansprüche 1 bis 6, wobei das mindestens eine Polyamid (A), welches in der Polyamidzusammensetzung (PC) vorliegt, aus der Gruppe ausgewählt ist, die aus Polyamid 6 (PA 6), Polyamid 66 (PA 66), Polyamid 6/66 (PA 6/66), Polyamid 66/6 (PA 66/6), Polyamid 610 (PA 610), Polyamid 6/6T (PA 6/6T), Polyamid 12 (PA12) und Polyamid 1212 (PA1212) besteht.

8. Polyamidzusammensetzung (PC) gemäß einem beliebigen der Ansprüche 1 bis 7, wobei die Polyamidzusammensetzung (PC) weiterhin mindestens ein Additiv (C) umfasst, das aus der Gruppe ausgewählt ist, welche aus den Stabilisatoren, Farbstoffen, Pigmenten, Füllstoffen, Verstärkungsmitteln, Schlagzähmodifizierern und Weichmachern besteht.

9. Polyamidzusammensetzung (PC) gemäß Anspruch 8, wobei die Polyamidzusammensetzung (PC) im Bereich von 0 bis 55 Gewichts-% an dem mindestens einen Additiv (C) umfasst, bezogen auf das Gesamtgewicht der Polyamidzusammensetzung (PC).

10. Polyamidzusammensetzung (PC) gemäß einem beliebigen der Ansprüche 1 bis 9, wobei der Bestandteil (B) bei 0,044 mm (325 mesh) einen Siebrückstand von weniger als 50 ppm aufweist.

11. Polyamidzusammensetzung (PC) gemäß einem beliebigen der Ansprüche 1 bis 10, wobei der Bestandteil (B) einen spezifischen Durchgangswiderstand von weniger als 100 Ω * cm aufweist.

12. Polyamidzusammensetzung (PC) gemäß einem beliebigen der Ansprüche 1 bis 11, wobei der Bestandteil (B) eine Schüttdichte von weniger als 300 g/L aufweist.

13. Verfahren zur Herstellung einer Polyamidzusammensetzung (PC) gemäß einem beliebigen der Ansprüche 1 bis 12, wobei der Bestandteil (A), ein Masterbatch (MB) und möglicherweise der Bestandteil (C) in einem Doppelschneckenextruder zu einer gleichförmigen Masse vermischt werden, wobei das Masterbatch den Bestandteil (A) und den Bestandteil (B) umfasst.

14. Verfahren gemäß Anspruch 13, wobei das Masterbatch (MB) im Bereich von 60 bis 80 Gewichts-% an Bestandteil (A) und im Bereich von 20 bis 40 Gewichts-% an Bestandteil (B) umfasst, jeweils bezogen auf das Gesamtgewicht des Masterbatches (MB) .

15. Verfahren zur Herstellung eines Formgegenstands, indem die Polyamidzusammensetzung (PC) gemäß den Ansprüchen 1 bis 12 einer Formgebung unterzogen wird.

16. Formgegenstand, der die Polyamidzusammensetzung (PC) gemäß den Ansprüchen 1 bis 12 umfasst.

17. Formgegenstand gemäß Anspruch 16, wobei der Formgegenstand einen spezifischen Durchgangswiderstand von 5 * 10¹¹ Ω * m aufweist.

18. Verwendung mindestens eines Rußbestandteils (B) in einer Polyamidzusammensetzung (PC), um die Schrumpfung von Formgegenständen zu erhöhen, welche aus der Polyamidzusammensetzung (PC) hergestellt sind, wobei die Oberflächenschicht des mindestens einen Rußbestandteils (B) nicht mehr als 2 Gewichts-% an Sauerstoff umfasst, bezogen auf das Gesamtgewicht der Oberflächenschicht des mindestens einen Rußbestandteils (B), und wobei das Gewicht an Sauerstoff in der Oberflächenschicht mittels Röntgen-Photoelektronenspektroskopie bei einer Röntgenstrahlen-Eindringtiefe von 2 bis 10 nm gemessen wird.

## Revendications

1. Composition de polyamide (PC) comprenant les composants (A) et (B) suivants
(A) au moins un polyamide,
(B) au moins un noir de carbone,
la couche de surface du composant (B) ne comprenant pas plus de 2 % en poids d'oxygène, sur la base du poids total de la couche de surface du composant (B), et le poids d'oxygène dans la couche de surface étant mesuré par spectroscopie photoélectronique à rayons X à une profondeur de pénétration des rayons X de 2 à 10 nm, la composition de polyamide (PC) comprenant dans la plage allant de 55 à 99,9 % en poids de l'au moins un polyamide (A) et dans la plage allant de 0,1 à 4 % en poids de l'au moins un noir de carbone (B), sur la base du poids total de la composition de polyamide (PC).

2. Composition de polyamide (PC) selon la revendication 1, la composition de polyamide (PC) comprenant dans la plage allant de 60 à 99,7 % en poids de composant (A) et dans la plage allant de 0,3 à 3 % en poids de composant (B), sur la base dans chaque cas du poids total de la composition de polyamide (PC).

3. Composition de polyamide (PC) selon la revendication 1 ou 2, la couche de surface du composant (B) ne comprenant pas plus de 1 % en poids d'azote, sur la base du poids total de la couche de surface du composant (B), et le poids d'azote dans la couche de surface étant mesuré par spectroscopie photoélectronique à rayons X à une profondeur de pénétration des rayons X de 2 à 10 nm.

4. Composition de polyamide (PC) selon l'une quelconque des revendications 1 à 3, dans laquelle le composant (B) est un noir de carbone de combustion partielle.

5. Composition de polyamide (PC) selon l'une quelconque des revendications 1 à 4, dans laquelle le composant (B) a un diamètre moyen dans la plage allant de 5 nm à 70 nm.

6. Composition de polyamide (PC) selon l'une quelconque des revendications 1 à 5, l'au moins un polyamide (A) présent dans la composition de polyamide (PC) étant choisi dans le groupe constitué par PA 4, PA 6, PA 7, PA 8, PA 9, PA 11, PA 12, PA 46, PA 66, PA 69, PA 510, PA 610, PA 612, PA 613, PA 1212, PA1313, PA 6T, PA MXD6, PA 61, PA 6-3-T, PA 6/6T, PA 6/66, PA 66/6, PA 6/12, PA 66/6/610, PA 61/6T, PA PACM 12, PA 61/6T/PACM, PA 12/MACMI, PA 12/MACMT, PA PDA-T et des copolyamides composés de deux ou plus des polyamides susmentionnés.

7. Composition de polyamide (PC) selon l'une quelconque des revendications 1 à 6, l'au moins un polyamide (A) présent dans la composition de polyamide (PC) étant choisi dans le groupe constitué par le polyamide 6 (PA 6), le polyamide 66 (PA 66), le polyamide 6/66 (PA 6/66), le polyamide 66/6 (PA 66/6), le polyamide 610 (PA 610), le polyamide 6/6T (PA 6/6T), le polyamide 12 (PA12) et le polyamide 1212 (PA1212).

8. Composition de polyamide (PC) selon l'une quelconque des revendications 1 à 7, la composition de polyamide (PC) comprenant en outre au moins un additif (C) choisi dans le groupe constitué par des stabilisants, des colorants, des pigments, des charges, des agents de renforcement, des modificateurs de résistance au choc et des plastifiants.

9. Composition de polyamide (PC) selon la revendication 8, la composition de polyamide (PC) comprenant dans la plage allant de 0 à 55 % en poids de l'au moins un additif (C), sur la base du poids total de la composition de polyamide (PC).

10. Composition de polyamide (PC) selon l'une quelconque des revendications 1 à 9, dans laquelle le composant (B) a un résidu sur tamis de 0,044 mm (325 mesh) de moins de 50 ppm.

11. Composition de polyamide (PC) selon l'une quelconque des revendications 1 à 10, dans laquelle le composant (B) a une résistivité transversale de moins de 100 Ω*cm.

12. Composition de polyamide (PC) selon l'une quelconque des revendications 1 à 11, dans laquelle le composant (B) a une masse volumique apparente de moins de 300 g/l.

13. Procédé pour la production d'une composition de polyamide (PC) selon l'une quelconque des revendications 1 à 12, dans lequel le composant (A), un mélange maître (MB) et éventuellement le composant (C) sont mélangés dans une extrudeuse à deux vis, dans lequel le mélange maître (MB) comprend le composant (A) et le composant (B) .

14. Procédé selon la revendication 13, dans lequel le mélange maître (MB) comprend de 60 à 80 % en poids de composants (A) et dans la plage allant de 20 à 40 % en poids de composant (B), sur la base dans chaque cas du poids total du mélange maître (MB).

15. Procédé pour la production d'un article moulé par la formation de la composition de polyamide (PC) selon les revendications 1 à 12.

16. Article moulé comprenant la composition de polyamide (PC) selon les revendications 1 à 12.

17. Article moulé selon la revendication 16, l'article moulé ayant une résistivité transversale d'au moins 5*10¹¹ Ω*m.

18. Utilisation d'au moins un noir de carbone (B) dans une composition de polyamide (PC) pour l'augmentation du retrait d'articles moulés formés à partir de ladite composition de polyamide (PC), la couche de surface de l'au moins un noir de carbone (B) ne comprenant pas plus de 2 % en poids d'oxygène, sur la base du poids total de la couche de surface de l'au moins un noir de carbone (B), et le poids d'oxygène dans la couche de surface étant mesuré par spectroscopie photoélectronique à rayons X à une profondeur de pénétration des rayons X de 2 à 10 nm.
